# EUROPEAN PATENT APPLICATION

(11) **EP 3 357 666 A1**
(43) Date of publication of application: **08.08.2018**
(21) Application number: 16850791.1
(22) Date of filing: 04.07.2016
(51) Int. Cl.: B29C 45/73, B29C 45/04, B29C 45/26

(54) **MOLDING DIE, MOLDED PRODUCT PRODUCTION DEVICE, AND MOLDED PRODUCT PRODUCTION METHOD**

(30) Priority: 28.09.2015 JP 2015189077
(71) Applicant: Mitsubishi Electric Corporation, Chiyoda-ku Tokyo 100-8310 (JP)
(72) Inventor: OGAWA Mizuki, Tokyo 100-8310 (JP); KANETO Yoshinori, Tokyo 100-8310 (JP); SAITO Koji, Tokyo 100-8310 (JP); TANAKA Shigeyuki, Tokyo 100-8310 (JP); IMAIZUMI Masaru, Tokyo 100-8310 (JP)
(74) Representative: Lavoix
(86) International application number: PCT/JP2016/069734
(87) International publication number: WO 2017/056614

(57) **Abstract**

The purpose is to obtain a molding die, a molded product production device, and a molded product production method that enable the time for heating a cavity to be shortened and enable improvement in production efficiency. This molding die includes: a pair of dies, i.e., a first die (13) and a second die (14) respectively having abutting surfaces; a first die part (11) and a second die part (12) respectively having cavity forming portions (11A, 12A) inside which a cavity (110) is formed, and thick portions (11B, 12B) provided at both ends of the cavity forming portions (11A, 12A), the die parts being detachably fitted to die part attachment grooves (13b, 14b) provided in the abutting surfaces (13a, 14a) of the pair of dies; and induction heating coils (81) for heating a surface (110a) of the cavity (110), wherein thicknesses of the cavity forming portions (11A, 12A) are smaller than thicknesses of the thick portions (11B, 12B), and the distance between the induction heating coils (81) and the cavity (110) is smaller than the thicknesses of the thick portions.

## Description

### TECHNICAL FIELD

The present invention relates to a molding die, a molded product production device, and a molded product production method.

### BACKGROUND ART

In a conventional molding method, a plurality of cavity units (dies) having cavities formed therein are sequentially conveyed to a heating station, a filling-and-relaxing station, a slow-cooling station, and then a molded product extraction station, and the respective processing steps are performed at the same time. In this molding method, in the heating step, the die is enclosed by a pair of L-shaped blocks in which bar-shaped heaters are embedded, and the entire die is heated from the outside thereof, whereby the internal cavity is heated (see, for example, Patent Document 1).

### CITATION LIST

### PATENT DOCUMENT

Patent Document 1: Japanese Laid-Open Patent Publication No. 7-205189 (FIG. 4)

### SUMMARY OF THE INVENTION

### PROBLEMS TO BE SOLVED BY THE INVENTION

However, in the above molding method, the entire die is heated in order to heat the internal cavity. Therefore, it takes a long time to heat the cavity, and thus there is a problem that production efficiency is low.

The present invention has been made to solve the above problem, and an object of the present invention is to obtain a molding die, a molded product production device, and a molded product production method that enable the time for heating the cavity to be shortened and enable improvement in production efficiency.

### SOLUTION TO THE PROBLEMS

A molding die according to a first aspect of the present invention includes: a pair of dies respectively having abutting surfaces; a die part provided to at least one of the pair of dies, the die part having a cavity forming portion allowing a cavity to be formed between the cavity forming portion and the other die of the pair of dies, the die part having thick portions provided at both ends of the cavity forming portion; and heating means for heating a surface of the cavity, wherein a thickness of the cavity forming portion is smaller than thicknesses of the thick portions.

In the molding die according to a second aspect of the present invention based on the first aspect, the thick portions of the die part have greater heat capacities than the cavity forming portion, and the heating means is arranged at such a position that a distance from the cavity of the die part is smaller than the thicknesses of the thick portions.

### EFFECT OF THE INVENTION

According to the present invention, the thickness of the cavity forming portion of the die part is smaller than the thicknesses of the thick portions, and the distance between the cavity and the heating means for heating the surface of the cavity is smaller than the thicknesses of the thick portions, so that the surface of the cavity can be directly heated. Therefore, it is possible to shorten the time for heating the cavity and improve production efficiency.

### BRIEF DESCRIPTION OF THE DRAWINGS

[FIG. 1] FIG. 1 is a schematic diagram of a molded product production device according to embodiment 1 of the present invention.
[FIG. 2] FIG. 2 is a sectional view of a molding die according to embodiment 1 of the present invention.
[FIG. 3] FIG. 3 is a perspective view of a molded product molded by the molding die according to embodiment 1 of the present invention.
[FIG. 4] FIG. 4 is a sectional view of the molding die according to embodiment 1 of the present invention, showing die opening.
[FIG. 5] FIG. 5 is a sectional view of the molding die according to embodiment 1 of the present invention, showing an extraction step for die parts.
[FIG. 6] FIG. 6 is a sectional view of a cooling device according to embodiment 1 of the present invention.
[FIG. 7] FIG. 7 is a sectional view of a die opening device according to embodiment 1 of the present invention.
[FIG. 8] FIG. 8 is a sectional view of a mold release device according to embodiment 1 of the present invention.
[FIG. 9] FIG. 9 is a sectional view illustrating a molded product production method according to embodiment 1 of the present invention.
[FIG. 10] FIG. 10 is a sectional view of a molding die according to a modification of embodiment 1 of the present invention.
[FIG. 11] FIG. 11 is a sectional view of a molding die according to embodiment 2 of the present invention.
[FIG. 12] FIG. 12 is a perspective view of a molded product molded by the molding die according to embodiment 2 of the present invention.
[FIG. 13] FIG. 13 is a sectional view of the molding die according to embodiment 2 of the present invention, showing die opening.
[FIG. 14] FIG. 14 is a sectional view of the molding die according to embodiment 2 of the present invention, showing an extraction step for die parts.
[FIG. 15] FIG. 15 is a sectional view of a cooling device according to embodiment 2 of the present invention.
[FIG. 16] FIG. 16 is a sectional view of a mold release device according to embodiment 2 of the present invention.
[FIG. 17] FIG. 17 is a sectional view illustrating a molded product production method according to embodiment 2 of the present invention.
[FIG. 18] FIG. 18 is a sectional view of a molding die according to embodiment 3 of the present invention.
[FIG. 19] FIG. 19 is a perspective view of a molded product molded by the molding die according to embodiment 3 of the present invention.
[FIG. 20] FIG. 20 is a sectional view of the molding die according to embodiment 3 of the present invention, showing an extraction step for die parts.
[FIG. 21] FIG. 21 is a sectional view of a cooling device according to embodiment 3 of the present invention.
[FIG. 22] FIG. 22 is a sectional view of a mold release device according to embodiment 3 of the present invention.
[FIG. 23] FIG. 23 is a sectional view illustrating a molded product production method according to embodiment 3 of the present invention.
[FIG. 24] FIG. 24 is a sectional view of a molding die according to embodiment 4 of the present invention.
[FIG. 25] FIG. 25 is an enlarged sectional view of part P where the positions of a first die part 11 and a second die part 12 are restrained with each other, according to embodiment 4 of the present invention.

### DESCRIPTION OF EMBODIMENTS

### Embodiment 1

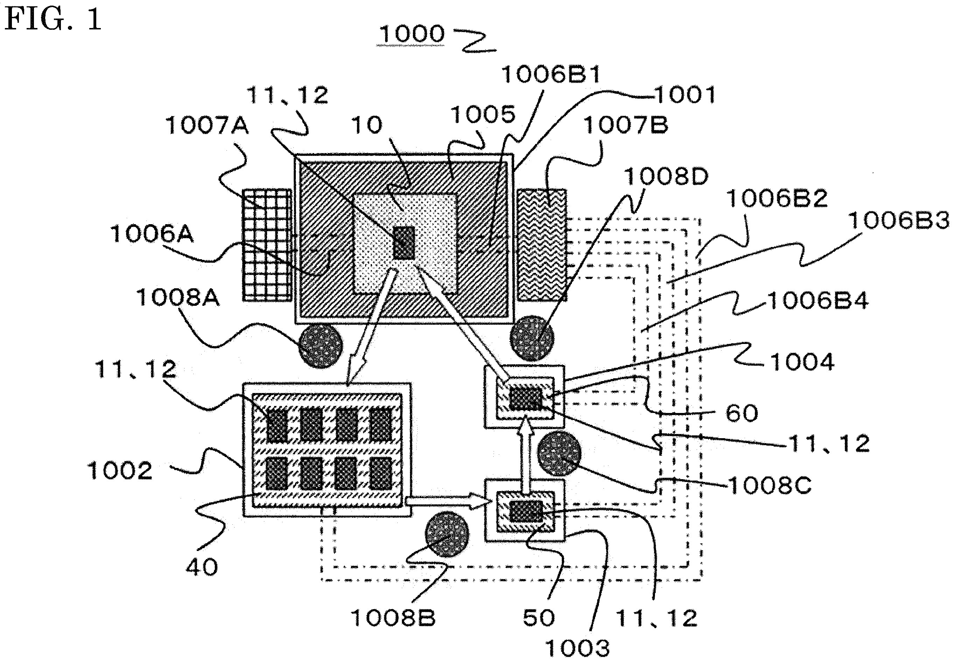

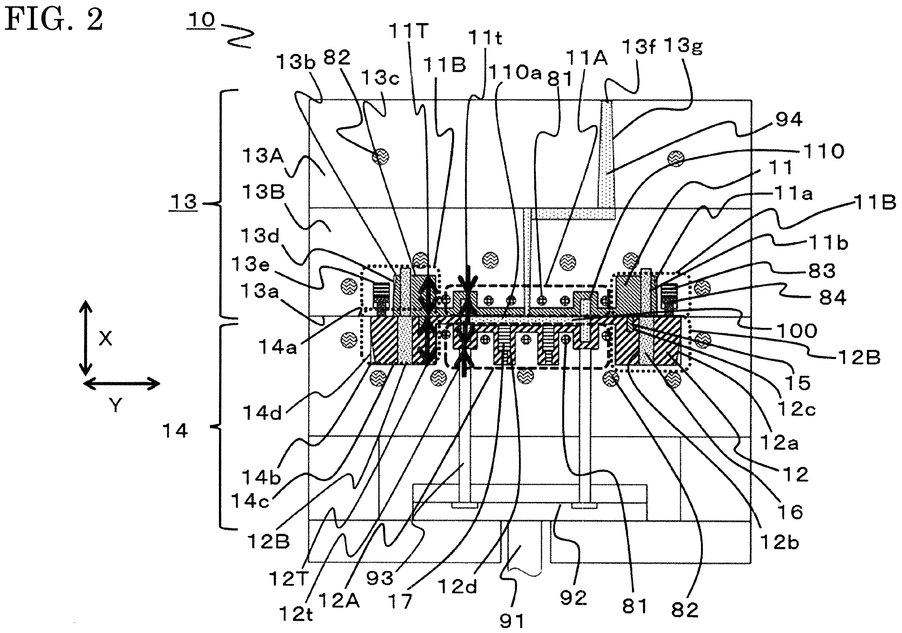

Hereinafter, embodiment 1 of the present invention will be described with reference to the drawings. FIG. 1 is a schematic diagram of a molded product production device according to embodiment 1 of the present invention, and FIG. 2 is a sectional view of a molding die according to embodiment 1 of the present invention.

As shown in FIG. 1, the molded product production device 1000 includes: a molding station 1001 having a molding machine 1005; a cooling station 1002 having a cooling device 40; a die part opening station 1003 having a die part opening device 50; and a mold release station 1004 having a mold release device 60. A molding die 10 is fixed to the molding machine 1005, and a first die part 11 and a second die part 12 are detachably provided to the molding die 10.

Induction heating coils 81 provided to the molding die 10 are connected to a heating control device 1007A via a current conduction part 1006A. Cooling tubes 82 are connected to a cooling control device 1007B via a pipe 1006B1. In addition, cooling tubes (described later) respectively provided to the cooling device 40, the die part opening device 50, and the mold release device 60 are connected to the cooling control device 1007B via pipes 1006B2, 1006B3, 1006B4.

Robots 1008A to 1008D having robot arms (not shown) are conveyance means for the first die part 11 and the second die part 12. The robot 1008A conveys the first die part 11 and the second die part 12 from the molding station 1001 to the cooling station 1002. The robot 1008B conveys the first die part 11 and the second die part 12 from the cooling station 1002 to the die opening station 1003. The robot 1008C conveys the first die part 11 and the second die part 12 from the die opening station 1003 to the mold release station 1004. The robot 1008D conveys the first die part 11 and the second die part 12 from the mold release station 1004 to the molding station 1001. In this way, through conveyance by the robots 1008A to 1008D, the first die part 11 and the second die part 12 are circulated among the stations.

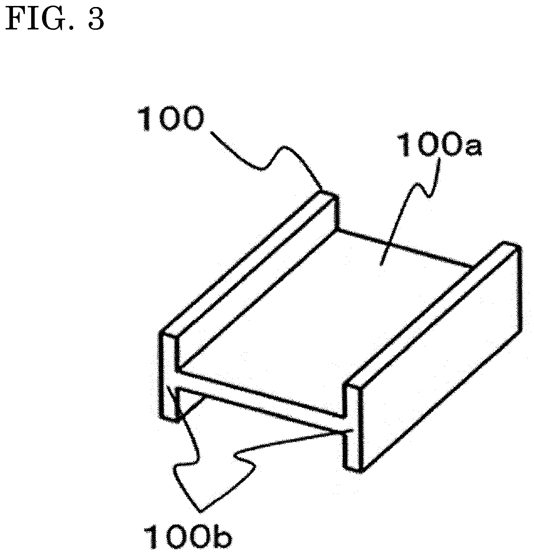

As shown in FIG. 2, the molding die 10 includes: a pair of dies, i.e., a first die 13 and a second die 14 having abutting surfaces 13a, 14a; a first die part 11 detachably fitted to die part attachment grooves 13b provided in the abutting surface 13a of the first die 13; and a second die part 12 detachably fitted to die part attachment grooves 14b provided in the abutting surface 14a of the second die 14. The first die part 11 and the second die part 12 have: cavity forming portions 11A and 12A inside which a cavity 110 having an H-shaped cross section is formed when the abutting surface 13a and the abutting surface 14a abut on each other; and thick portions 11B, 12B respectively formed integrally at both ends of the cavity forming portions 11A, 12A, whereby, as shown in FIG. 3, a molded product 100 having an H-shaped cross section is to be formed which has a base plate 100a and side walls 100b standing at both ends of the base plate 100a. It is noted that thicknesses 11t, 12t of the cavity forming portions 11A, 12A are smaller than thicknesses 11T, 12T of the thick portions 11B, 12B so that the thick portions 11B, 12B have greater heat capacities than the cavity forming portions 11A, 12A.

The die part attachment grooves 13b, 14b have: a restraining portion 13c and a restraining portion 14c for restraining the positions of the first die part 11 and the second die part 12 in a die open-close direction X; and a restraining portion 13d and a restraining portion 14d for restraining the positions of the first die part 11 and the second die part 12 in a direction Y perpendicular to the die open-close direction X.

The thick portions 11B of the first die part 11 and the thick portions 12B of the second die part 12 have taper portions 11a, 12a serving as guides at the time of insertion into the die part attachment grooves 13b, 14b. In addition, pins 15 fixed on the first die part 11 are fitted to groove portions 12c provided in the second die part 12, whereby the first die part 11 and the second die part in a closed state are prevented from being displaced from each other. Here, the pins 15 are fixed on the first die part 11, but the pins 15 may be fixed on the second die part 12. In this case, groove portions to which the pins 15 are fitted are provided in the first die part 11.

The first die 13 is composed of two dies of an upper die 13A and a lower die 13B. The upper die 13A is provided with an injection port 13f for injecting a molding material, and the injection port 13f and the cavity 110 are connected via an injection passage 13g. Of the molding material injected from the injection port 13f, the molding material injected to fill the cavity 110 will become a molded product 100. The molding material injected to fill the injection passage 13g will be discarded as a waste material 94. In groove portions 13e provided in the lower die 13B, springs 83 are provided at the bottoms thereof and sliding pins 84 are provided to the springs 83.

The second die 14 is provided with guide pins 16 having stepped shapes. The guide pins 16 are to be inserted into holes 12b provided in the second die part 12, and holes 11b provided in the first die part 11 and having smaller inner diameters than the holes 12b. In addition, ejector pins 17 are inserted into holes 12d provided in the second die part 12.

The first die 13 and the second die 14 have the induction heating coils 81, i.e., heating means, around the cavity forming portions 11A, 12A. As described above, the induction heating coils 81 are connected to the current conduction part 1006A and are controlled by the heating control device 1007A to heat a surface 110a of the cavity 110. The induction heating coils 81 are arranged at such positions that the distance from the cavity 110 is smaller than the thicknesses of the thick portions 11B, 12B. The cooling tubes 82 provided in the first die 13 and the second die 14 are connected to the pipe 1006B1 and a medium such as water, oil, or vapor adjusted to a predetermined temperature by the cooling control device 1007B is circulated through the cooling tubes 82, whereby the temperatures of the first die 13 and the second die 14 are kept constant.

Two ejector pins 93 extend upward from a plate 92 connected to one end of a rod 91 provided under the second die 14. The ejector pins 93 reach the lower surface of the second die part 12. The other end of the rod 91 is connected to a drive portion (not shown) of the molding machine 1005.

Here, the induction heating coils are used as the heating means. However, without limitation thereto, a heater or a water temperature controller may be used. In the case of using a water temperature controller as the heating means, the means for connection to the heating control device 1007A is replaced with a pipe through which water adjusted at a predetermined temperature is caused to flow, instead of the current conduction part 1006A.

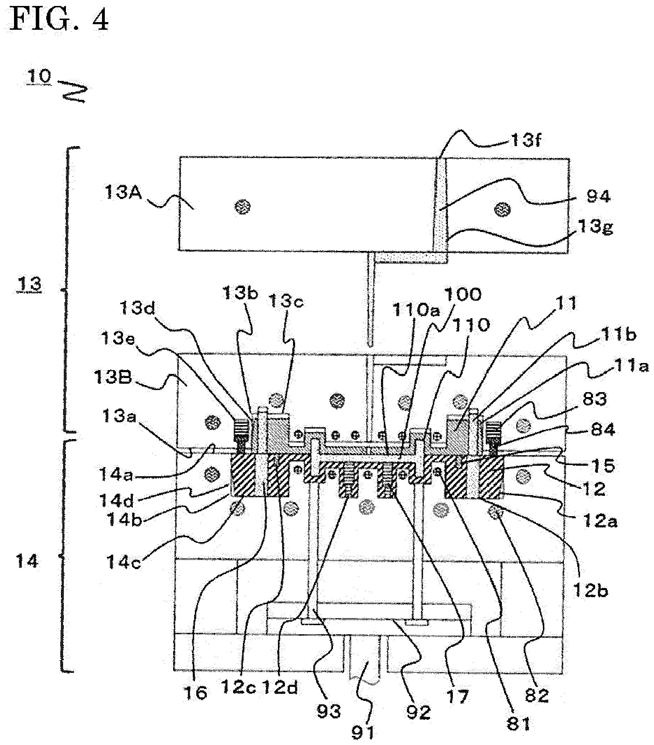

FIG. 4 shows die opening of the molding die 10. To perform die opening of the molding die 10, first, the first die 13 is separated into the upper die 13A and the lower die 13B, whereby the molded product 100 and the waste material 94 are separated from each other. Next, the abutting surface 13a of the first die 13 and the abutting surface 14a of the second die 14 are separated from each other. At this time, the sliding pins 84 provided to the first die 13 act outward of the groove portions 13e by reaction forces from the springs 83, to press the second die part 12 to the die part attachment grooves 14b of the second die 14, whereby the second die part 12 is prevented from coming out of the die part attachment grooves 14b.

The first die part 11 is drawn downward by mold release resistance with the molded product 100, and thereby separated from the first die. As a result, the first die part 11 and the second die part 12 are both retained on the second die 14. It is noted that either the separation between the upper die 13A and the lower die 13B of the first die 13, or the separation between the abutting surface 13a of the first die 13 and the abutting surface 14a of the second die 14 may be performed first.

By performing die opening of the molding die 10 as described above, it becomes possible to extract the first die part 11 and the second die part 12 from the first die 13 and the second die 14, and thus it becomes possible to extract the molded product 100 molded in the cavity 110 from the first die 13 and the second die 14, integrally with the first die part 11 and the second die part 12.

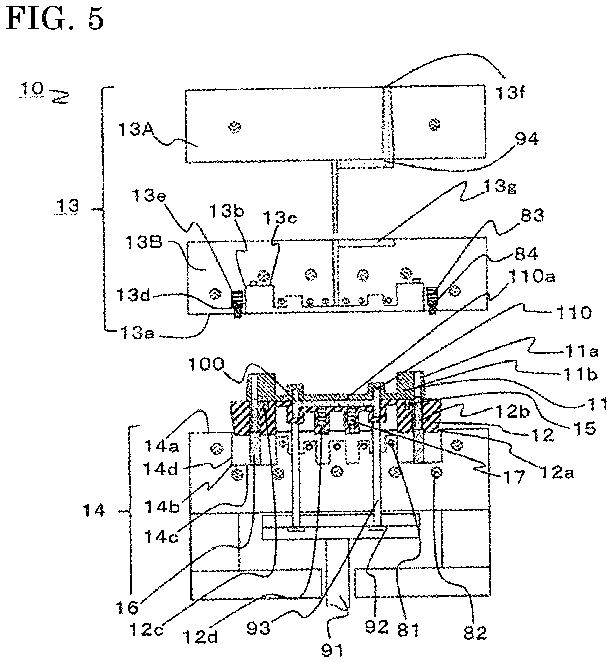

FIG. 5 shows an extraction step for the first die part 11 and the second die part 12. The rod 91 is driven upward by the drive portion (not shown) connected to the other end of the rod 91, to move the plate 92 and the ejector pins 93 upward. Thus, the lower surface of the second die part 12 is pushed upward by the ejector pins 93, and the second die part 12 is pushed out of the second die 14 along the guide pins 16, whereby the first die part 11 and the second die part 12 are extracted from the molding die 10. At this time, the molded product 100 inside the cavity 110 is also extracted from the molding die 10, integrally with the first die part 11 and the second die part 12.

In general, depending on the specifications of the molding machine 1005, the direction of the molding die 10 attached to the molding machine 1005 is not limited to that shown in FIG. 5, and the molding die 10 may be attached being turned clockwise by 90 degrees. In this case, the guide pins 16 also serve a role of supporting the first die part 11 and the second die part 12 so that the first die part 11 and the second die part 12 do not drop when ejected by the ejector pins 93 in the extraction step.

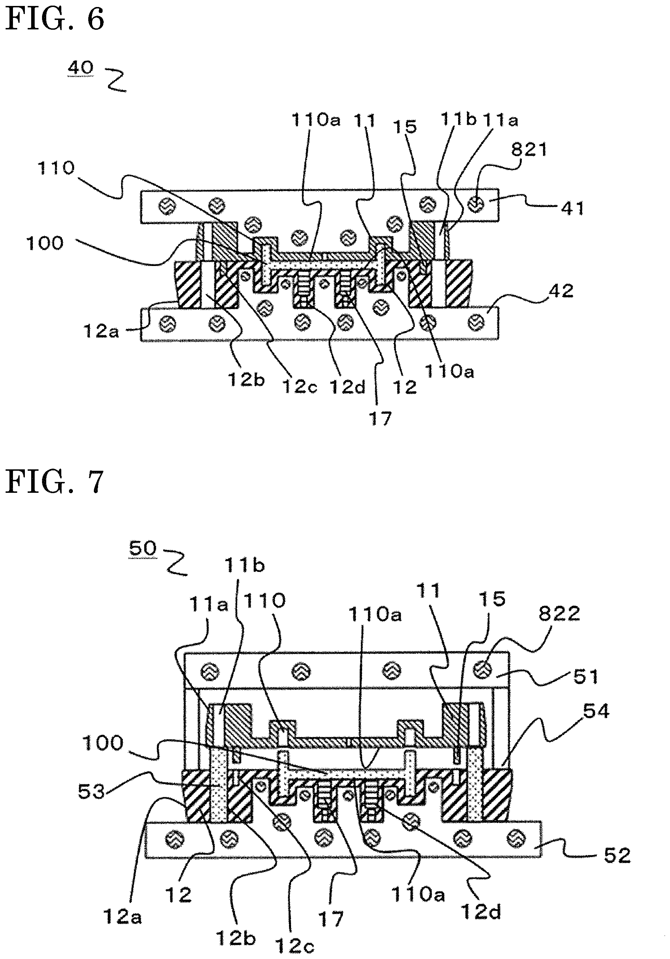

FIG. 6 is a sectional view showing the cooling device according to embodiment 1 of the present invention. As shown in FIG. 6, the cooling device 40 includes: a first cooling jig 41 and a second cooling jig 42 sandwiching the first die part 11 and the second die part 12 together with the molded product 100 from the upper and lower sides; and a plurality of cooling tubes 821 provided in each of the first cooling jig 41 and the second cooling jig 42. As described above, the cooling tubes 821 are connected to the pipe 1006B2, and a medium such as water, oil, or vapor adjusted to a predetermined temperature by the cooling control device 1007B is circulated through the cooling tubes 821. A drive portion (not shown) formed from, for example, an air cylinder is attached to the second cooling jig 42, and the cooling device 40 moves the second cooling jig 42 upward and downward, thereby sandwiching the first die part 11 and the second die part 12 or performing detachment thereof. It is noted that such a drive portion may be attached to the first cooling jig 41, instead of the second cooling jig 42. In addition, the shape of the surface, of the first cooling jig 41, that contacts with the first die part 11 coincides with the shape of the upper surface of the first die part 11, and the shape of the surface of, the second cooling jig 42, that contacts with the second die part 12 coincides with the shape of the lower surface of the second die part 12.

FIG. 7 is a sectional view showing the die part opening device according to embodiment 1 of the present invention. The die part opening device 50 includes: a first die part opening jig 51; a second die part opening jig 52 arranged opposite to the first die part opening jig 51; ejector pins 53 extending upward from the upper surface of the second die part opening jig 52; pressing portions 54 extending downward from the lower surface of the first die part opening jig 51; and a plurality of cooling tubes 822 provided in each of the first die part opening jig 51 and the second die part opening jig 52. A drive portion (not shown) formed from, for example, an air cylinder is attached to the first die part opening jig 51, and the first die part opening jig 51 is driven upward and downward by the drive portion. As described above, the cooling tubes 822 are connected to the pipe 1006B3, and a medium such as water, oil, or vapor adjusted to a predetermined temperature by the cooling control device 1007B is circulated through the cooling tubes 822. It is noted that the diameters of the ejector pins 53 are greater than the inner diameters of the holes 11b of the first die part 11. In addition, the diameters of the ejector pins 53 may be equal to or smaller than the inner diameters of the holes 12b of the second die part 12. From the perspective of positioning, it is preferable that the diameters of the ejector pins 53 are equal to the inner diameters of the holes 12b.

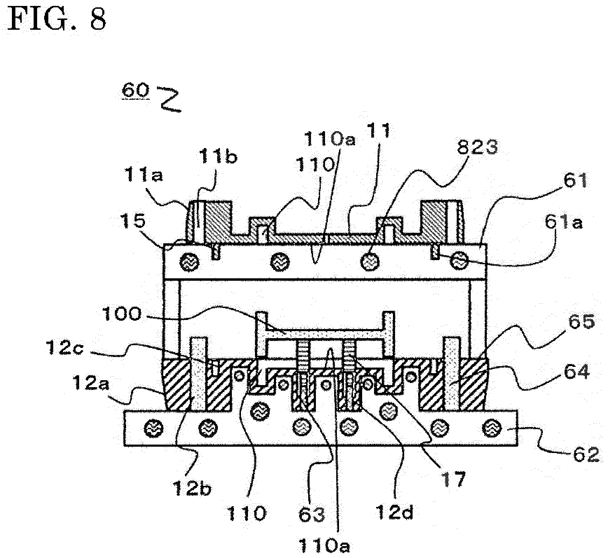

FIG. 8 is a sectional view showing the mold release device according to embodiment 1 of the present invention. As shown in FIG. 8, the mold release device 60 includes: a first mold release jig 61; a second mold release jig 62 arranged opposite to the first mold release jig 61; and a plurality of cooling tubes 823 provided in each of the first mold release jig 61 and the second mold release jig 62. As described above, the cooling tubes 823 are connected to the pipe 1006B4, and a medium such as water, oil, or vapor adjusted to a predetermined temperature by the cooling control device 1007B is circulated through the cooling tubes 823. The pins 15 fixed on the first die part 11 are fitted to groove portions 61a provided in the upper surface of the first mold release jig 61, whereby the first die part 11 can be attached to the upper surface of the first mold release jig 61. In addition, pressing portions 65 extend downward from the lower surface of the first mold release jig 61, and the end surfaces of the pressing portions 65 come into contact with the upper surface of the second die part 12. In addition, a drive portion (not shown) formed from, for example, an air cylinder is attached to the first mold release jig 61, and the first mold release jig 61 is driven upward and downward by the drive portion. The second mold release jig 62 has guide pins 64 having diameters equal to those of the holes 12b of the second die part 12, and ejector pins 63 to be inserted into the holes 12d.

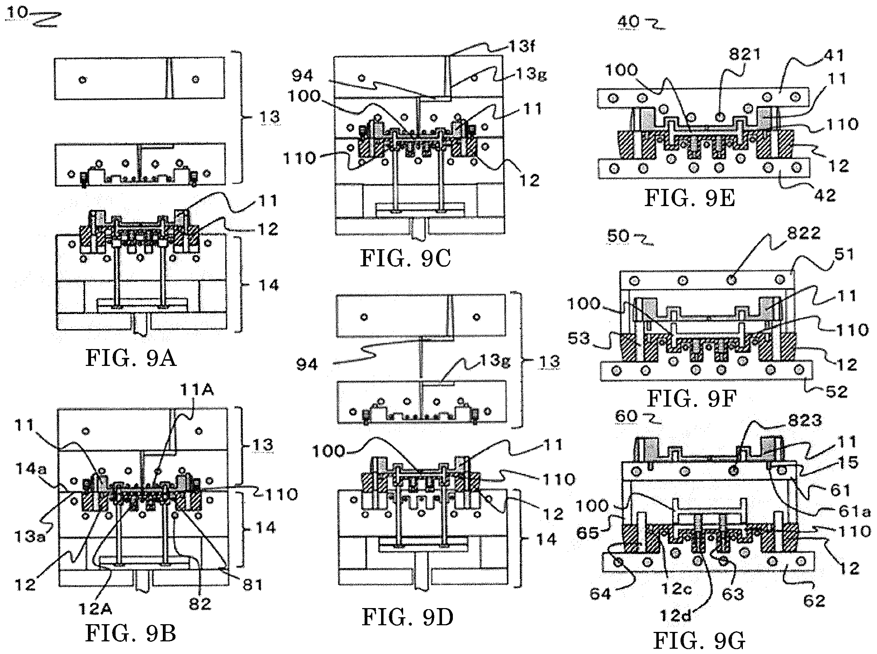

Next, a molded product production method according to embodiment 1 of the present invention will be described. FIG. 9 is a sectional view illustrating the molded product production method according to embodiment 1 of the present invention.

In the present embodiment, a thermoplastic crystalline resin called polyphenylene sulfide resin (PPS resin) is used as the molding material for the molded product 100. The melting point of this resin is 290 degrees Celsius, and the glass transition temperature thereof is 92 degrees Celsius. In the case of using a crystalline resin such as PPS resin, it is necessary to promote crystallization under a proper cooling speed, in order to prevent deterioration in molding accuracy of the molded product. In addition, it is also necessary to relax a stress occurring in a molding step and suppress deformation after mold release, by cooling the molded product to an appropriate temperature with the molded product restrained by the first die part 11 and the second die part 12. Therefore, it is preferable that the temperature of the cavity from when the melted PPS resin is injected to when the crystallization is saturated is set at 120 degrees Celsius to 150 degrees Celsius, and it is preferable that the temperatures of the dies in relaxation of the stress are set in a range between "glass transition temperature" and "glass transition temperature - 20 degrees Celsius". Considering the above, in the present embodiment, during a period from injection of the PPS resin to saturation of the crystallization, the temperature of the surface 110a of the cavity 110 is kept at 130 degrees Celsius, and the temperatures of the first die 13 and the second die 14 are kept at 80 degrees Celsius, as described later.

FIG. 9(a) shows a die assembling step. In this step, at the molding station 1001, the first die part 11 and the second die part 12 are attached to the first die 13 and the second die 14, and the first die 13 and the second die 14 are combined to assemble the molding die 10. Here, the temperatures of the outer surfaces of the first die part 11 and the second die part 12 are adjusted to 80 degrees Celsius in advance. In addition, a medium such as water or oil the temperature of which is adjusted by the cooling control device 1007B is circulated among the cooling control device 1007B, the pipes 1006B, and the cooling tubes 82, whereby the temperatures of the first die 13 and the second die 14 are kept at 80 degrees Celsius.

FIG. 9(b) shows a heating step. Currents are applied to the induction heating coils 81 from the heating control device 1007A via the current conduction part 1006A, to generate eddy currents at the cavity forming portions 11A, 12A, whereby the surface 110a of the cavity 110 is directly heated to raise the temperature of the cavity 110 to 130 degrees Celsius. In parallel with this, the first die part 11 and the second die part 12 are closed with the abutting surfaces 13a, 14a abutting on each other. It is noted that, also here, the temperatures of the first die 13 and the second die 14 are kept at 80 degrees Celsius.

FIG. 9(c) shows a molding step. First, by the molding machine 1005, PPS resin melted by its temperature being raised to 310 degrees Celsius is injected from the injection port 13f to fill the cavity 110. Thereafter, the injected PPS resin is contracted, and accordingly, the PPS resin is further supplied from the injection port 13f under some pressure. After a necessary amount of PPS resin is supplied and the molding is completed, the molding machine 1005 shifts to melting and measurement of PPS resin in order to perform the next molding. In this process, until crystallization of the PPS resin filling the cavity 110 reaches saturation, currents are applied to the induction heating coils 81 and the temperature of the surface 110a of the cavity 110 is kept at 130 degrees Celsius. After crystallization of the PPS resin has reached saturation, the supply of currents to the induction heating coils 81 is stopped. Thus, heat of the surface 110a of the cavity 110 is dissipated to the surrounding area, so that the temperature of the surface 110a of the cavity 110 rapidly lowers toward 80 degrees Celsius. Owing to heat transmission of the first die part 11 and the second die part 12 and heat conduction in the molded product 100, the molded product 100 passes, in a short time, a high-temperature zone in which a thermal stress to be relaxed is still small, and then, in a temperature zone near the glass transition temperature in which a thermal stress to be relaxed is great and thus a long time is required, a difference between the temperature of the first die 13 and the second die 14 and the temperature of the molded product 100 is small and the temperature change approaches saturation, so that the molded product 100 is cooled slowly.

At this time, the temperatures of the first die 13 and the second die 14 are kept at 80 degrees Celsius by the cooling control device 1007B. In the first die part 11 and the second die part 12, heat applied to the surface 110a of the cavity 110 by the induction heating coils 81 spreads by heat conduction, and after the induction heating coils 81 are stopped, these die parts are cooled toward 80 degrees Celsius by the first die 13 and the second die 14.

FIG. 9(d) shows an extraction step. The first die 13 and the second die 14 are separated from each other, and the first die part 11 and the second die part 12 together with the molded product 100 are integrally extracted from the first die 13 and the second die 14. The extraction can be performed by the robot arm (not shown) of the robot 1008A, for example. After the extraction step, the first die part 11 and the second die part 12 with the molded product 100 stored in the cavity 110 are conveyed to the cooling station 1002 by the robot 1008A.

FIG. 9(e) shows a cooling step. First, the first die part 11 and the second die part 12 with the molded product 100 stored in the cavity 110 are attached to the cooling device 40. The temperatures of the first cooling jig 41 and the second cooling jig 42 are kept at 80 degrees Celsius by the cooling tubes 821. In this step, the first die part 11 and the second die part 12 are sandwiched from the upper and lower sides by the first cooling jig 41 and the second cooling jig 42 the temperatures of which are adjusted to 80 degrees Celsius, whereby, successively, the molded product 100 is slowly cooled toward 80 degrees Celsius, and the temperatures of the first die part 11 and the second die part 12 are also controlled toward 80 degrees Celsius. After the cooling step, by the robot 1008B, the first die part 11 and the second die part 12 with the molded product 100 stored in the cavity 110 are extracted from the cooling device 40 and conveyed to the die part opening station 1003.

FIG. 9(f) shows a die part opening step. First, the first die part 11 and the second die part 12 with the molded product 100 stored in the cavity 110 are attached to the die part opening device 50. The temperatures of the first die part opening jig 51 and the second die part opening jig 52 are kept at 80 degrees Celsius by the cooling tubes 822. The die opening of the first die part 11 and the second die part 12 by the die part opening device 50 is performed as follows. First, the first die part and the second die part together with the molded product 100 are placed on the second die part opening jig with the ejector pins 53 inserted into the holes 12b of the second die part 12, and the first die part opening jig 51 is placed above the first die part 11 and the second die part 12. Next, the first die part opening jig 51 is driven downward by the drive portion (not shown) attached to the first die part opening jig 51. Thus, the pressing portions 54 are pressed to the second die part 12, thereby moving the second die part 12 and the molded product 100 downward. Here, the first die part 11 is also pulled downward by mold release resistance of the molded product 100, but the ejector pins 53, which have diameters larger than the inner diameters of the holes 11b, prevent the first die part 11 from moving downward.

As described above, only the second die part 12 and the molded product 100 move downward, whereby the two die parts are opened and the first die part 11 is separated. In this step, by the die part opening device 50, the first die part 11 is separated off from the second die part 12 and the molded product 100, and the temperatures of the first die part 11 and the second die part 12 are controlled toward 80 degrees Celsius by the first die part opening jig 51 and the second die part opening jig 52 the temperatures of which are adjusted to 80 degrees Celsius. After the die part opening step, by the robot 1008C, the first die part 11, and the second die part 12 holding the molded product 100 in the cavity 110 are extracted from the die part opening device 50, and conveyed to the mold release station 1004.

FIG. 9(g) shows a mold release step. First, the second die part 12 holding the molded product 100 in the cavity 110 is attached to the mold release device 60. In addition, the pins 15 fixed on the first die part 11 are fitted to the groove portions 61a provided in the upper surface of the first mold release jig 61, and thus the first die part 11 is placed on the first mold release jig 61 while being positioned by the pins 15. The mold release of the molded product 100 by the mold release device 60 is performed as follows. First, the guide pins 64 are inserted into the holes 12b of the second die part 12 and thus the second die part 12 together with the molded product 100 is attached to the second mold release jig 62. At this time, the ejector pins 63 are also inserted into the holes 12d and thus are located under the ejector pins 17 provided in the second die part 12. Next, the first mold release jig 61 is driven downward by the drive portion (not shown) attached to the first mold release jig 61. Thus, the pressing portions 65 are pressed to the second die part 12, thereby moving the second die part 12 and the molded product 100 downward. Here, the ejector pins 17 provided in the second die part 12 slide by being pushed by the ejector pins 63 of the second mold release jig 62, so as to extrude the molded product 100 upward, whereby the molded product 100 is released from the second die part.

The temperatures of the first mold release jig 61 and the second mold release jig 62 are kept at 80 degrees Celsius by the cooling tubes 823. In this step, by the mold release device 60, the molded product 100 is released from the second die part 12, and the temperatures of the first die part 11 and the second die part 12 are controlled toward 80 degrees Celsius by the first mold release jig 61 and the second mold release jig 62 the temperatures of which are adjusted to 80 degrees Celsius.

After the mold release step, the first die part 11 and the second die part 12 are taken out from the mold release device 60, and then, in a state in which the first die part 11 and the second die part 12 are closed with the pins 15 fitted to the groove portions 12c of the second die part 12, the first die part 11 and the second die part 12 are conveyed to the molding station 1001 by the robot 1008D, to return to FIG. 9(a). It is noted that, as described above, during a period from the cooling step to the mold release step, the temperatures of the first die part 11 and the second die part 12 have been controlled so as to be 80 degrees Celsius, and therefore their outer surface temperatures have become 80 degrees Celsius at the stage of returning to FIG. 9(a).

As described above, these steps are repeated through circulation among the stations. It is noted that plural pairs of the first die parts 11 and the second die parts 12 may be prepared for one pair of dies 13, 14, and the works of the respective steps may be performed in parallel at the same time. In this case, differences among the times required in the respective steps may be adjusted by the numbers of the first die parts 11 and the second die parts 12 to be used in each station. For example, if the time required in the cooling station 1002 is eight times as long as the time required in another station, the cooling device 40 may be configured so as to allow eight first die parts 11 and eight second die parts 12 to be placed, as shown in FIG. 1.

Here, PPS resin which is a crystalline resin is used as the molding material. However, without limitation thereto, another crystalline resin or a non-crystalline resin may be used. In the case of using a non-crystalline resin, the temperature for heating the surface of the cavity by the induction heating coils may be set to be equal to or higher than the glass transition temperature.

In embodiment 1, the thicknesses of the cavity forming portions of the first die part and the second die part are smaller than the thicknesses of the thick portions, and the distance between the cavity and the induction heating coils which heat the surface of the cavity is smaller than the thicknesses of the thick portions. Therefore, the surface of the cavity can be directly heated. Thus, the time for heating the cavity can be shortened and production efficiency can be improved.

Since the heating of the cavity is local heating to the surface of the cavity, the amount of heat entering the first die part and the second die part is small, and therefore a time taken for cooling is also shortened. Thus, production efficiency can be further improved.

The molded product is conveyed integrally with the first die part and the second die part in a state in which the molded product is stored in the cavity of the first die part and the second die part which are attachable to and detachable from the first die and the second die. Therefore, during the cooling, the molded product is untouched and the molded product is prevented from being damaged.

The guide pins provided on the second die are inserted into the holes provided in the first die part and the second die part, and in the extraction step, the first die part and the second die part are extracted from the molding die along the guide pins. Therefore, even if the molding die is sideways attached to the molding machine, the first die part and the second die part can be prevented from dropping.

The shape of the surface, of the first cooling jig, that contacts with the first die part coincides with the surface of the upper surface of the first die part, and the shape of the surface, of the second cooling jig, that contacts with the second die part coincides with the shape of the lower surface of the second die part. Therefore, there is no gap between each cooling jig and each die part, and cooling efficiency is improved.

The thick portions having great heat capacities are provided at both ends of the cavity forming portions, whereby deformation due to temperature change in the first die part and the second die part is suppressed. Therefore, in attachment and detachment of the first die part and the second die part, the surfaces of the first and second die part attachment grooves are not galled and the dies or the die parts can be prevented from being damaged.

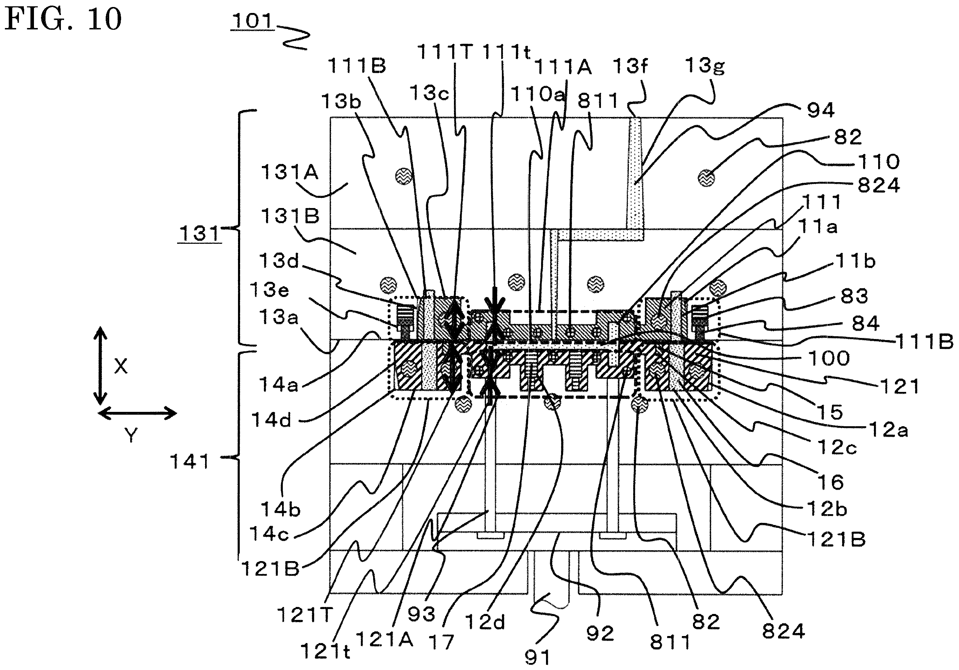

Next, a modification of embodiment 1 of the present invention will be described with reference to FIG. 10. In FIG. 10, components that are the same as or correspond to those in FIG. 1 are denoted by the same reference characters, and the description thereof is omitted. This modification is different in that induction heating coils as heating means are provided in the first die part and the second die part but are not provided in the first die and the second die.

As shown in FIG. 10, the molding die 101 includes: a pair of dies, i.e., a first die 131 and a second die 141 having abutting surfaces 13a, 14a; a first die part 111 detachably fitted to die part attachment grooves 13b provided in the abutting surface 13a of the first die 131; and a second die part 121 detachably fitted to die part attachment grooves 14b provided in the abutting surface 14a of the second die 141. The first die part 111 and the second die part 121 have: cavity forming portions 111A and 121A in which a cavity 110 having an H-shaped cross section is formed when the abutting surface 13a and the abutting surface 14a abut on each other; and thick portions 111B, 121B respectively formed integrally at both ends of the cavity forming portions 111A, 121A. Thicknesses 111t, 121t of the cavity forming portions 111A, 121A are smaller than thicknesses 111T, 121T of the thick portions 111B, 121B so that the thick portions 111B, 121B have greater heat capacities than the cavity forming portions 111A, 121A.

Induction heating coils 811, i.e., heating means are provided in the cavity forming portions 111A, 121A. In addition, cooling tubes 824 are provided in the thick portions 111B, 121B. The other components are the same as in the molding die 10 except that the induction heating coils 81 are not provided in the first die 131 and the second die 141 as described above.

Similarly to the induction heating coils 81 of the molding die 10, the induction heating coils 811 are connected to the heating control device 1007A via the current conduction part 1006A shown in FIG. 1, and are controlled by the heating control device 1007A. In addition, the cooling tubes 824 are connected to the cooling control device 1007B via the pipe 1006B1 and are controlled by the cooling control device 1007B. Here, the connection between the induction heating coils 811 and the heating control device 1007A, and the connection between the cooling tubes 824 and the cooling control device 1007B may be established only when the first die part 111 and the second die part 112 are attached to the first die 13 and the second die 14, and may be disconnected when the first die part 111 and the second die part 112 are extracted from the first die 13 and the second die 14. Alternatively, the connection may be always maintained irrespective of the attachment/detachment state. In the case of always maintaining the connection, heating and cooling can be performed even during a period when the first die part 111 and the second die part 121 are detached from the first die 13 and the second die 14 and conveyed, for example.

In this modification, the induction heating coils are provided in the cavity forming portions of the die parts. Therefore, the heating range can be further reduced and the heating time can be shortened.

In addition, the cooling tubes are provided in the thick portions of the die parts. Therefore, temperature change in the die parts can be suppressed and thus attachment/detachment performance is improved.

### Embodiment 2

Hereinafter, embodiment 2 of the present invention will be described with reference to the drawings. A molded product production device 2000 (not shown) according to embodiment 2 of the present invention is different from the molded product production device 1000 according to embodiment 1 shown in FIG. 1 in that the die part opening station 1003, the die part opening device 50, the pipe 1006B3, and the robot 1008C are not provided.

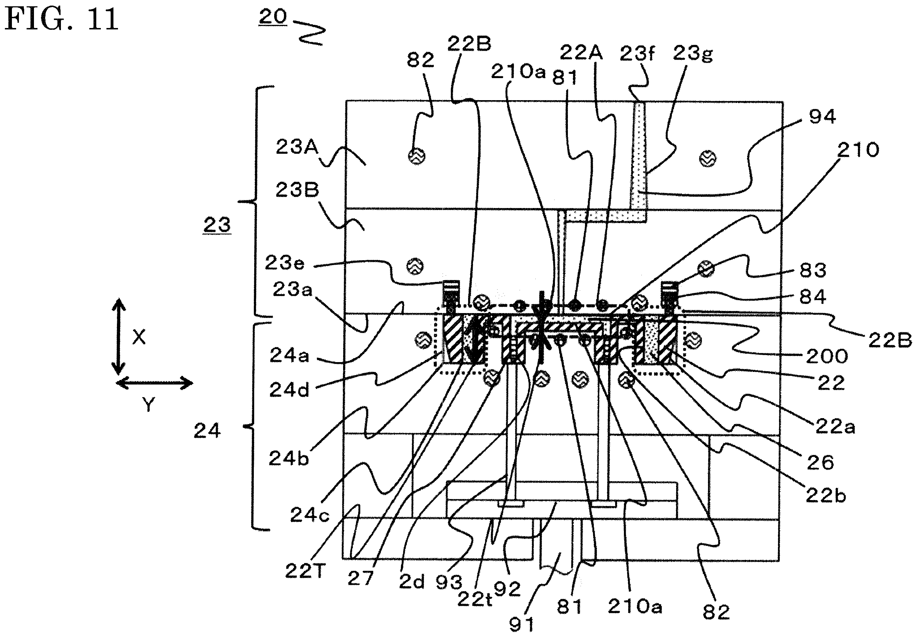

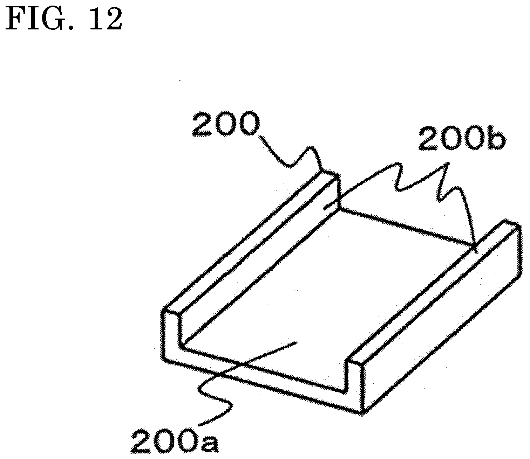

As shown in FIG. 11, a molding die 20 includes: a pair of dies composed of a first die 23, i.e., one die and a second die 24, i.e., another die, which respectively have abutting surfaces 23a, 24a; and a die part 22 detachably fitted to die part attachment grooves 24b provided in the abutting surface 24a of the second die 24. The die part 22 includes: a cavity forming portion 22A which allows a cavity 210 having a U-shaped cross section to be formed between the cavity forming portion 22A and the abutting surface 23a when the abutting surface 23a and the abutting surface 24a abut on each other; and thick portions 22B formed integrally at both ends of the cavity forming portion 22A, whereby, as shown in FIG. 12, a molded product 200 having a U-shaped cross section is to be formed which has a base plate 200a and side walls 200b standing at both ends of the base plate 200a. It is noted that a thickness 22t of the cavity forming portion 22A is smaller than thicknesses 22T of the thick portions 22B so that the thick portions 22B have greater heat capacities than the cavity forming portion 22A.

Each die part attachment groove 24b has: a restraining portion 24c for restraining the position of the die part 22 in the die open-close direction X; and a restraining portion 24d for restraining the position of the die part 22 in the direction Y perpendicular to the die open-close direction X. In addition, the thick portions 22B of the die part 22 have taper portions 22a serving as guides at the time of insertion into the die part attachment grooves 24b.

The first die 23 is composed of two dies of an upper die 23A and a lower die 23B. The upper die 23A is provided with an injection port 23f for injecting a molding material, and the injection port 23f and the cavity 210 are connected via an injection passage 23g. Of the molding material injected from the injection port 23f, the molding material injected to fill the cavity 210 will become a molded product 200. The molding material injected to fill the injection passage 23g will be discarded as a waste material 94. In groove portions 23e provided in the lower die 13B, springs 83 are provided at the bottoms thereof and sliding pins 84 are provided to the springs 83. It is noted that, as described above, in the present embodiment, the cavity 210 is formed between the abutting surface 23a and the cavity forming portion 22A, and therefore a part, of the abutting surface 23a, that contacts with the cavity 210 also becomes a surface 210a of the cavity 210.

The second die 24 is provided with guide pins 26. The guide pins 26 are to be inserted into holes 22b provided in the die part 22. In addition, ejector pins 27 are inserted into holes 22d.

The first die 23 and the second die 24 have the induction heating coils 81, i.e., heating means, around the cavity forming portion 22A. The induction heating coils 81 are connected to the current conduction part 1006A and controlled by the heating control device 1007A to heat the surface 210a of the cavity 210. The induction heating coils 81 are arranged at such positions that the distance from the cavity 210 is smaller than the thicknesses of the thick portions 22B. The cooling tubes 82 provided in the first die 23 and the second die 24 are connected to the pipe 1006B1 and a medium such as water, oil, or vapor adjusted to a predetermined temperature by the cooling control device 1007B is circulated through the cooling tubes 82, whereby the temperatures of the first die 23 and the second die 24 are kept constant.

Two ejector pins 93 extend upward from a plate 92 connected to one end of a rod 91 provided under the second die 24. The ejector pins 93 reach the lower surface of the die part 22. The other end of the rod 91 is connected to a drive portion (not shown) formed from, for example, an air cylinder.

Here, the induction heating coils are used as the heating means, but as in embodiment 1, heating means such as a heater or a water temperature controller may be used.

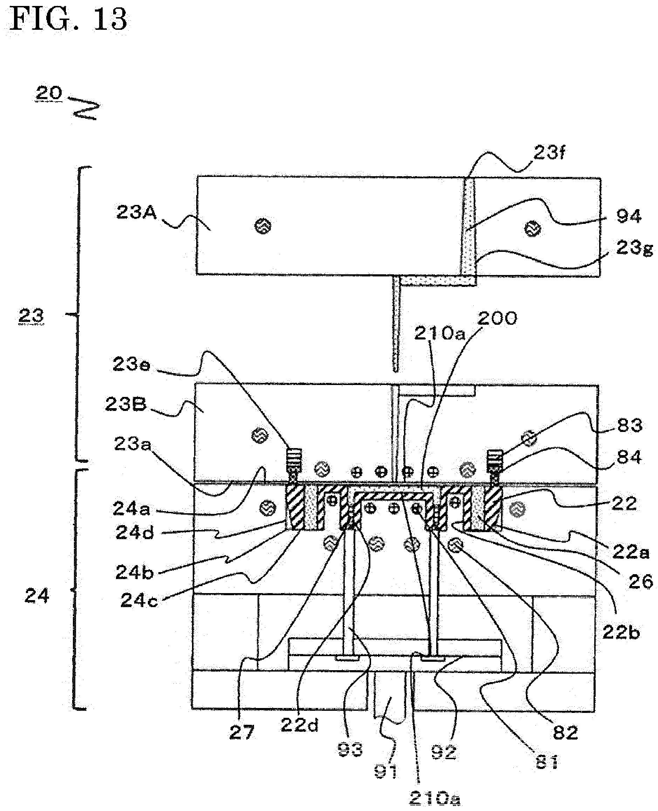

FIG. 13 shows die opening of the molding die 20. To perform die opening of the molding die 20, first, the first die 23 is separated into the upper die 23A and the lower die 23B, whereby the molded product 100 and the waste material 94 are separated from each other. Next, the abutting surface 23a of the first die 23 and the abutting surface 24a of the second die 24 are separated from each other. At this time, the sliding pins 84 provided to the first die 23 act outward of the groove portions 23e by reaction forces from the springs 83, to press the die part 22 to the die part attachment grooves 24b of the second die 24, whereby the die part 22 is prevented from coming out of the die part attachment grooves 24b. The molded product 200 is integrated with the die part 22 owing to mold release resistance with the die part 22.

By performing die opening of the molding die 20 as described above, it becomes possible to extract the die part 22 from the second die 24, and thus it becomes possible to extract the molded product 200 molded in the cavity 210 from the first die 23 and the second die 24, integrally with the die part 22.

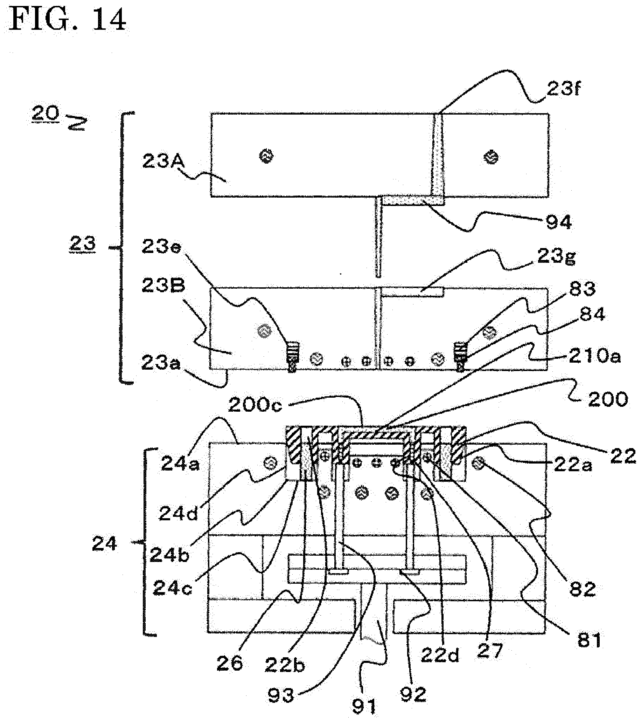

FIG. 14 shows an extraction step for the die part 22. The rod 91 is driven upward by the drive portion (not shown) connected to the other end of the rod 91, to move the plate 92 and the ejector pins 93 upward. Thus, the lower surface of the die part 22 is pushed upward by the ejector pins 93, and the die part 22 is pushed out of the second die 24 along the guide pins 26, whereby the die part 22 is extracted from the molding die 20. At this time, the molded product 200 is also extracted from the molding die 20, integrally with the die part 22. It is noted that, of the base plate 200a of the molded product 200, a surface having contacted with the abutting surface 23a of the first die 23 becomes an exposed surface 200c.

In general, depending on the specifications of the molding machine 1005, the direction of the molding die 20 attached to the molding machine 1005 is not limited to that shown in FIG. 14, and the molding die 20 may be attached being turned clockwise by 90 degrees. In this case, the guide pins 26 also serve a role of supporting the die part 22 so that the die part 22 does not drop when ejected by the ejector pins 93 in the extraction step.

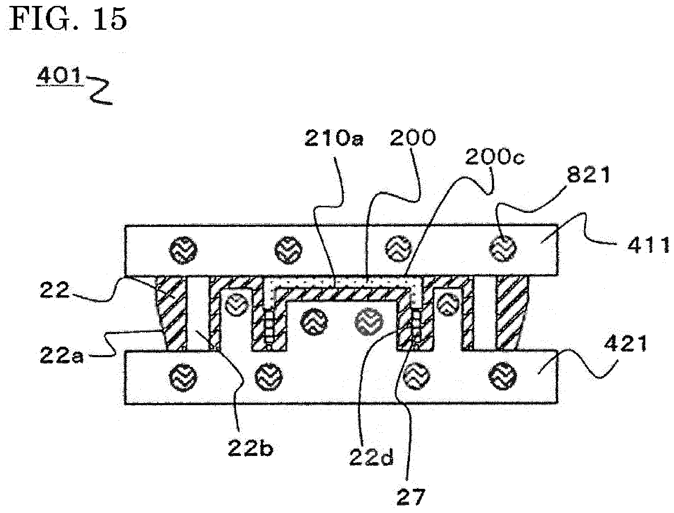

FIG. 15 is a sectional view showing a cooling device according to embodiment 2 of the present invention. As shown in FIG. 15, the cooling device 401 includes: a first cooling jig 411 and a second cooling jig 421 sandwiching the die part 22 together with the molded product 200 from the upper and lower sides; and a plurality of cooling tubes 821 provided in each of the first cooling jig 411 and the second cooling jig 421. Although not shown, of the lower surface of the first cooling jig 411, a part that contacts with the exposed surface 200c of the molded product 200 has the same flat shape as the exposed surface 200c. A drive portion (not shown) formed from, for example, an air cylinder is attached to the second cooling jig 421, and the cooling device 401 moves the second cooling jig 421 upward and downward, thereby sandwiching the die part 22 or performing detachment thereof. It is noted that such a drive portion may be attached to the first cooling jig 411, instead of the second cooling jig 421.

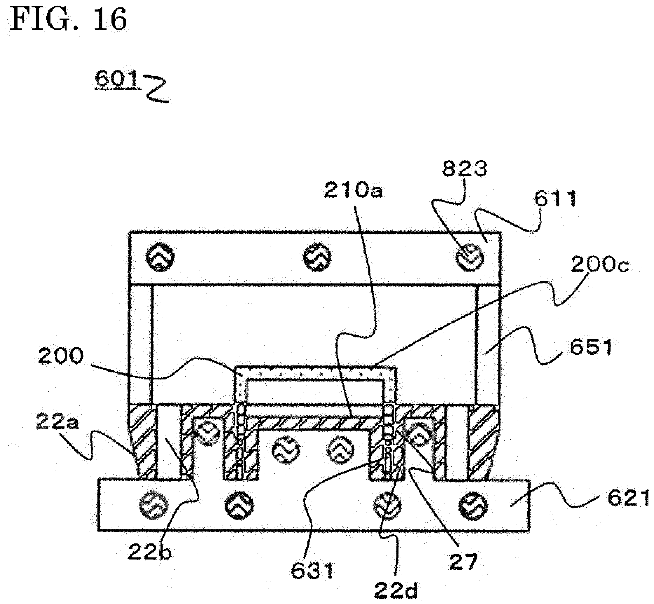

FIG. 16 is a sectional view showing a mold release device according to embodiment 2 of the present invention. As shown in FIG. 16, the mold release device 601 includes: a first mold release jig 611; a second mold release jig 621 arranged opposite to the first mold release jig 611; and a plurality of cooling tubes 823 provided in each of the first mold release jig 611 and the second mold release jig 621. Pressing portions 651 extend downward from the lower surface of the first mold release jig 611, and the end surfaces of the pressing portions 651 come into contact with the upper surface of the die part 22. Ejector pins 631 are provided on the second mold release jig 621. In addition, a drive portion (not shown) formed from, for example, an air cylinder is attached to the first mold release jig 611, and the first mold release jig 611 is driven upward and downward by the drive portion.

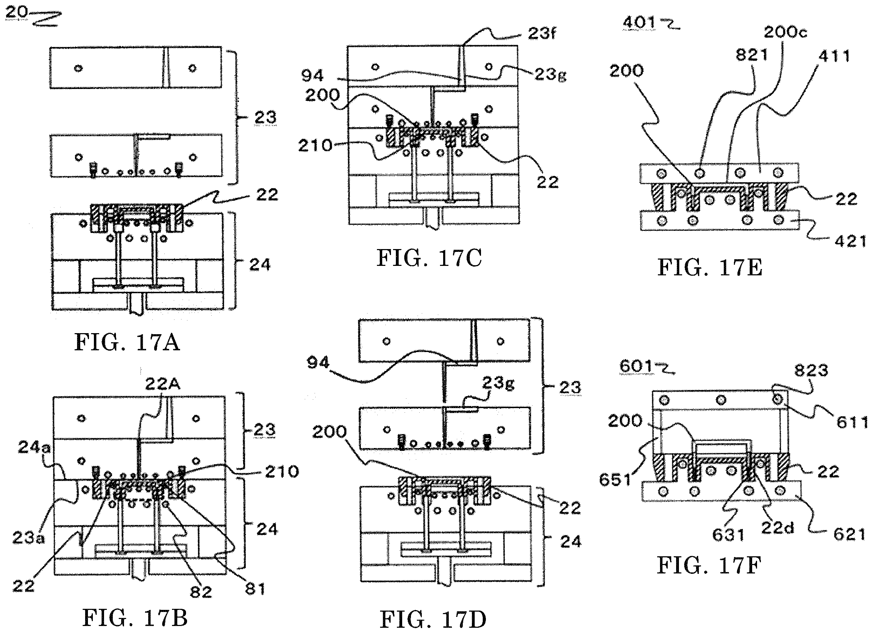

Next, a molded product production method according to embodiment 2 of the present invention will be described. FIG. 17 is a sectional view illustrating the molded product production method according to embodiment 2 of the present invention.

In the present embodiment, as in embodiment 1, PPS resin is used as the molding material for the molded product 200. Therefore, also in the present embodiment, the temperature of the surface 210a of the cavity 210 is set at 130 degrees Celsius, and the temperatures of the first die 23 and the second die 24 are set at 80 degrees Celsius.

FIG. 17(a) shows a die assembling step. In this step, at the molding station 1001, the die part 22 is attached to the first die 23 and the second die 24, and the first die 23 and the second die 24 are combined to assemble the molding die 20. Here, the temperature of the outer surface of the die part 22 is adjusted to 80 degrees Celsius in advance. In addition, as in embodiment 1, the temperatures of the first die 23 and the second die 24 are kept at 80 degrees Celsius.

FIG. 17(b) shows a heating step. First, currents are applied to the induction heating coils 81 from the heating control device 1007A via the current conduction part 1006A, to generate eddy currents at the cavity forming portion 22A, whereby the surface 110a of the cavity 210 is directly heated to raise the temperature of the cavity 210 to 130 degrees Celsius. In parallel with this, the abutting surfaces 23a, 24a are caused to abut on each other to form the cavity 210 between the abutting surface 23a of the first die 23 and the die part 22. It is noted that, also here, the temperatures of the first die 23 and the second die 24 are kept at 80 degrees Celsius.

FIG. 17(c) shows a molding step. First, by the molding machine 1005, PPS resin melted by its temperature being raised to 310 degrees Celsius is injected from the injection port 23f to fill the cavity 210. Thereafter, the injected PPS resin is contracted, and accordingly, the PPS resin is further supplied from the injection port 13f under some pressure. After a necessary amount of PPS resin is supplied and the molding is completed, the molding machine 1005 shifts to melting and measurement of PPS resin in order to perform the next molding. In this process, until crystallization of the PPS resin filling the cavity 210 reaches saturation, currents are applied to the induction heating coils 81 and the temperature of the surface 210a of the cavity 110 is kept at 130 degrees Celsius. After crystallization of the PPS resin has reached saturation, the supply of currents to the induction heating coils 81 is stopped. Thus, heat of the surface 210a of the cavity 210 is dissipated to the surrounding area, so that the temperature of the surface 210a of the cavity 210 rapidly lowers toward 80 degrees Celsius. Owing to heat transmission of the die part 22 and heat conduction in the molded product 200, the molded product 200 passes, in a short time, a high-temperature zone in which a thermal stress to be relaxed is still small, and then, in a temperature zone near the glass transition temperature in which a thermal stress to be relaxed is great and thus a long time is required, a difference between the temperature of the first die 23 and the second die 24 and the temperature of the molded product 200 is small and the temperature change approaches saturation, so that the molded product 200 is cooled slowly.

At this time, the temperatures of the first die 23 and the second die 24 are kept at 80 degrees Celsius by the cooling control device 1007B. In the die part 22, heat applied to the surface 210a of the cavity 210 by the induction heating coils 81 spreads by heat conduction, and after the induction heating coils 81 are stopped, the die part 22 is cooled toward 80 degrees Celsius by the first die 23 and the second die 24.

FIG. 17(d) shows an extraction step. The first die 23 and the second die 24 are separated from each other, and the die part 22 and the molded product 200 are integrally extracted from the second die 24. The extraction can be performed by the robot arm (not shown) of the robot 1008A, for example. After the extraction step, the die part 22 with the molded product 200 held therein is conveyed to the cooling station 1002 by the robot 1008A.

FIG. 17(e) shows a cooling step. First, the die part 22 holding the molded product 200 is attached to the cooling device 401. The temperatures of the first cooling jig 411 and the second cooling jig 421 are kept at 80 degrees Celsius by the cooling tubes 821. In this step, the die part 22 together with the molded product 200 is sandwiched from the upper and lower sides by the first cooling jig 411 and the second cooling jig 421 the temperatures of which are adjusted to 80 degrees Celsius, whereby the molded product 200 is slowly cooled toward 80 degrees Celsius and the temperature of the die part 22 is also controlled toward 80 degrees Celsius. Here, the exposed surface 200c of the molded product 200 is directly restrained by the first cooling jig, but since the part of the first cooling jig 411 that contacts with the exposed surface 200c of the molded product 200 has the same flat shape as the exposed surface 200c, the exposed surface 200c is not damaged.

After the cooling step, by the robot 1008B, the die part 22 holding the molded product 200 is extracted from the cooling device 40 and conveyed to the mold release station 1004.

FIG. 17(f) shows a mold release step. First, the die part 22 holding the molded product 200 is attached to the mold release device 601, and the ejector pins 631 are inserted into the holes 12d of the die part 22. Next, the first mold release jig 611 is driven downward by the drive portion (not shown) attached to the first mold release jig 611. Thus, the pressing portions 651 are pressed to the die part 22, thereby moving the die part 22 and the molded product 200 downward. Here, the ejector pins 631 inserted into the die part 22 slide upward and protrude therefrom, thereby releasing the molded product 200 from the die part 22.

The temperatures of the first mold release jig 611 and the second mold release jig 621 are kept at 80 degrees Celsius by the cooling tubes 823. In this step, by the mold release device 601, the molded product 200 is released from the die part 22, and the temperature of the die part 22 is controlled toward 80 degrees Celsius by the first mold release jig 611 and the second mold release jig 621 the temperatures of which are adjusted to 80 degrees Celsius.

After the mold release step, the die part 22 is taken out from the mold release device 601, and then conveyed to the molding station 1001 by the robot 1008D, to return to FIG. 17(a). It is noted that, as described above, during a period from the cooling step to the mold release step, the temperature of the die part 22 has been controlled so as to be 80 degrees Celsius, and therefore its outer surface temperature has become 80 degrees Celsius at the stage of returning to FIG. 17(a).

As described above, these steps are repeated through circulation among the stations. It is noted that a plurality of die parts 22 may be prepared for the die 24, and the works of the respective steps may be performed in parallel at the same time, as in embodiment 1.

Here, PPS resin which is a crystalline resin is used as the molding material. However, as in embodiment 1, another crystalline resin or a non-crystalline resin may be used.

According to embodiment 2, the same effects as in embodiment 1 can be obtained.

In addition, since only one die part is used, the configuration of the molding die is simplified. In addition, since the die part opening device and the die part opening station are not needed, the configuration of the molded product production device is simplified.

In addition, since the die part opening step is not performed, the die molding cycle can be further shortened.

It is noted that, also in the present embodiment, the induction heating coil may be provided in the cavity forming portion of the die part and the cooling tubes may be provided in the thick portions, as in the above modification of embodiment 1.

### Embodiment 3

Hereinafter, embodiment 3 of the present invention will be described with reference to the drawings. A molded product production device 3000 (not shown) according to embodiment 3 of the present invention is different from the molded product production device 1000 according to embodiment 1 shown in FIG. 1 in that the die part opening station 1003, the die part opening device 50, the pipe 1006B3, and the robot 1008C are not provided.

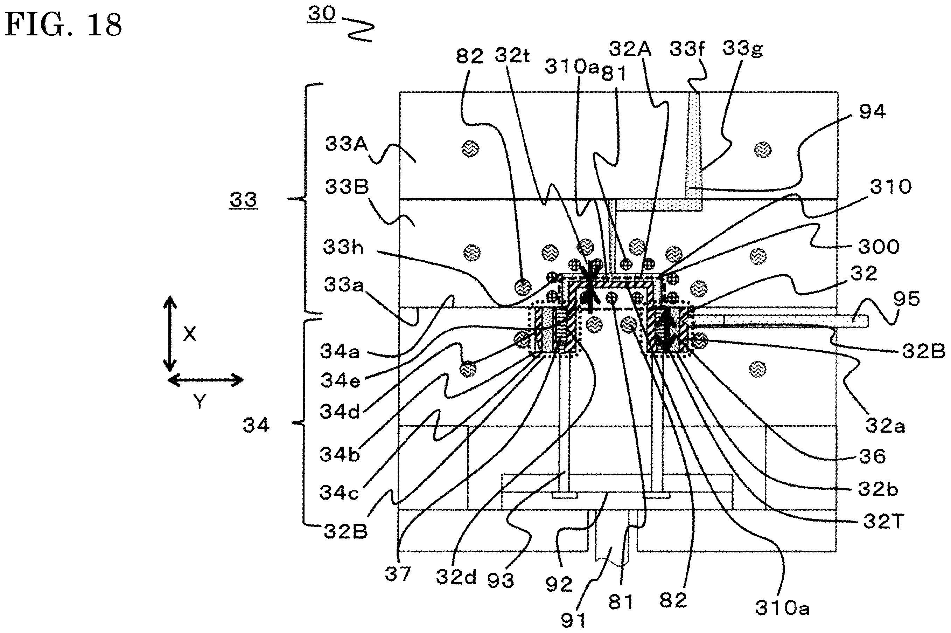

As shown in FIG. 18, a molding die 30 includes: a pair of dies composed of a first die 33, i.e., one die and a second die 34, i.e., another die, which respectively have abutting surfaces 33a, 34a; and a die part 32 detachably fitted to die part attachment grooves 34b provided in the abutting surface 34a of the second die 34.

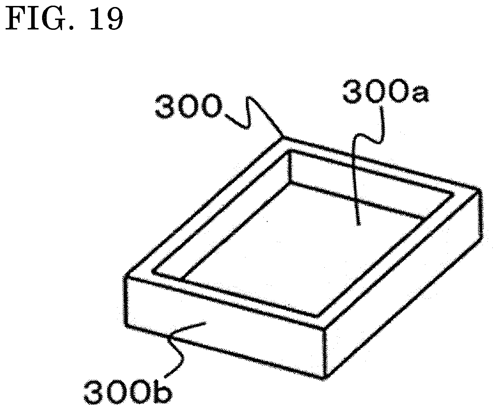

A cavity forming groove 33h is provided in the abutting surface 33a of the first die 33, and a projecting portion 34e opposed to the cavity forming groove 33h is provided on the abutting surface 34a of the second die 34. The die part 32 includes: a cavity forming portion 32A which covers the projecting portion 34e and allows a box-shaped cavity 310 to be formed between the cavity forming portion 32A and the cavity forming groove 33h provided in the abutting surface 33a when the abutting surface 33a and the abutting surface 34a abut on each other; and thick portions 32B formed integrally at both ends of the cavity forming portion 32A, whereby, as shown in FIG. 19, a box-shaped molded product 300 is to be formed which has a base plate 300a and side walls 300b standing at both sides of the base plate 300a. The molded product 300 of the present embodiment is required to have high accuracy of the dimension between the side walls 300b, and the cavity 310 at this part is formed by the die part 32. It is noted that a thickness 32t of the cavity forming portion 32A is smaller than thicknesses 32T of the thick portions 32B so that the thick portions 32B have greater heat capacities than the cavity forming portion 32A. Each die part attachment groove 34b has: a restraining portion 34c for restraining the position of the die part 32 in the die open-close direction X; and a restraining portion 34d for restraining the position of the die part 32 in the direction Y perpendicular to the die open-close direction X. In addition, the thick portions 32B of the die part 32 have taper portions 32a serving as guides at the time of insertion into the die part attachment grooves 34b.

The first die 33 is composed of two dies of an upper die 33A and a lower die 33B. The upper die 33A is provided with an injection port 33f for injecting a molding material, and the injection port 33f and the cavity 310 are connected via an injection passage 33g. Of the molding material injected from the injection port 33f, the molding material injected to fill the cavity 310 will become a molded product 300. The molding material injected to fill the injection passage 33g will be discarded as a waste material 94. It is noted that, as described above, in the present embodiment, the cavity 310 is formed between the cavity forming groove 33h provided in the abutting surface 33a and the cavity forming portion 32A of the die part 32, and therefore the surface of the cavity forming groove 33h also becomes a surface 310a of the cavity 310.

The second die 34 is provided with guide pins 36. The guide pins 36 are to be inserted into holes 32b provided in the die part 32. In addition, ejector pins 37 are inserted into holes 32d.

The first die 33 and the second die 34 have the induction heating coils 81, i.e., heating means, around the cavity forming portion 32A. The induction heating coils 81 are connected to the current conduction part 1006A and controlled by the heating control device 1007A to heat the surface 310a of the cavity 310. The induction heating coils 81 are arranged at such positions that the distance from the cavity 310 is smaller than the thicknesses of the thick portions 32B. The cooling tubes 82 provided in the first die 33 and the second die 34 are connected to the pipe 1006B1 and a medium such as water, oil, or vapor adjusted to a predetermined temperature by the cooling control device 1007B is circulated through the cooling tubes 82, whereby the temperatures of the first die 33 and the second die 34 are kept constant. In addition, a lock pin is inserted from one side surface of the second die 34 to the cavity attachment groove 34b, and the die part 32 is temporarily fixed by the lock pin 95. The other end of the lock pin 95 is connected to a drive device (not shown) formed from, for example, an air cylinder.

Two ejector pins 93 extend upward from a plate 92 connected to one end of a rod 91 provided under the second die 34. The ejector pins 93 reach the lower surface of the second die part 32. The other end of the rod 91 is connected to a drive portion (not shown) of the molding machine 1005.

Here, the induction heating coils are used as the heating means, but as in embodiments 1, 2, heating means such as a heater or a water temperature controller may be used.

Although not shown, die opening of the molding die 30 is performed in the same manner as for the molding dies 10, 20 in embodiments 1, 2, and owing to mold release resistance between the molded product 300 and the die part 32, the molded product 300 and the die part 32 can be integrally extracted in a state in which the part requiring high dimension accuracy of the molded product 300 is restrained by the die part 32. It is noted that, in embodiment 3, the die part 32 is prevented from coming out of the die part attachment grooves 34b at the time of die opening, by using the lock pin 95 instead of using the springs 83 and the sliding pins 84 used in embodiments 1, 2.

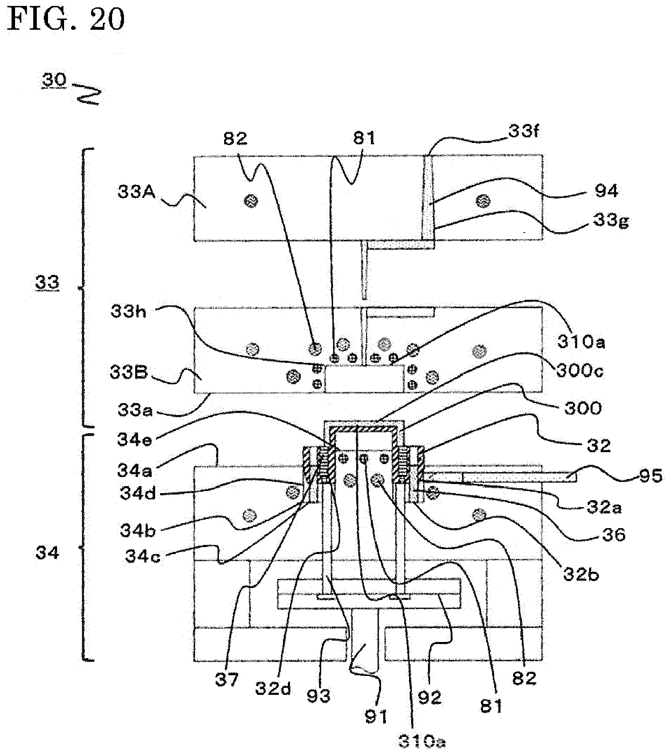

FIG. 20 shows an extraction step for the die part 32. First, the lock pin 95 is retracted to release the temporary fixation of the die part 32. In this state, the rod 91 is driven upward by the drive portion (not shown) connected to the other end of the rod 91, to move the plate 92 and the ejector pins 93 upward. Thus, the lower surface of the die part 32 is pushed upward by the ejector pins 93, and the die part 32 is pushed out of the second die 34 along the guide pins 36, whereby the die part 32 is extracted from the molding die 30. At this time, the molded product 300 is also extracted from the molding die 30, integrally with the die part 32. It is noted that, of the base plate 300a of the molded product 300, a surface having contacted with the cavity forming groove 33h of the first die 33 becomes an exposed surface 300c.

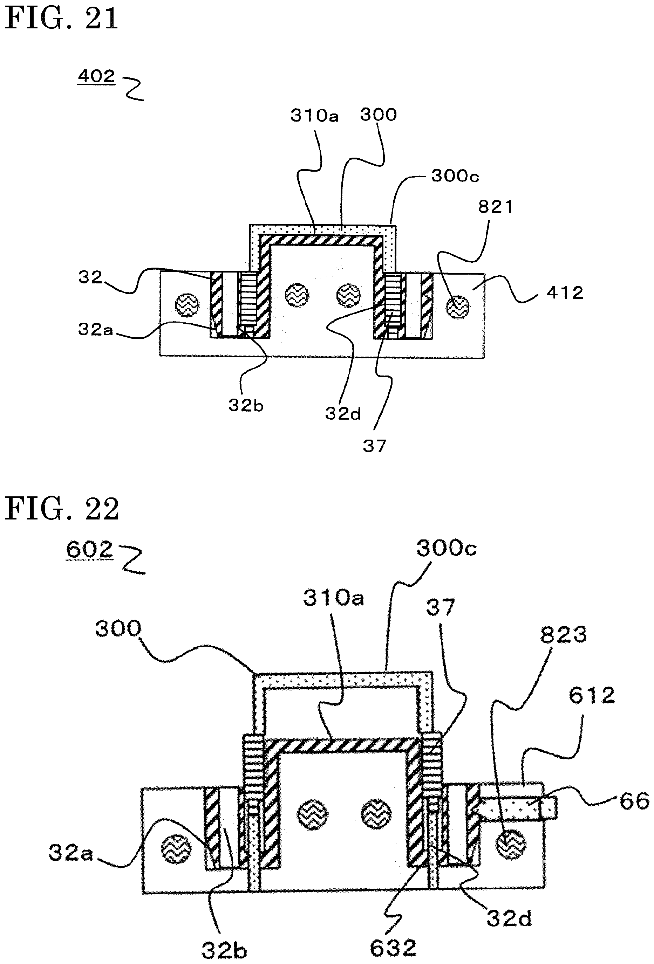

FIG. 21 is a sectional view showing a cooling device according to embodiment 3 of the present invention. As shown in FIG. 21, the cooling device 402 includes a cooling jig 412 and a plurality of cooling tubes 821 provided in the cooling jig 412. The upper surface of the cooling jig 412 coincides with the shape of the die part 32 so that the die part 32 holding the molded product 300 thereon can be placed on the upper surface.

FIG. 22 is a sectional view showing a mold release device according to embodiment 3 of the present invention. As shown in FIG. 22, the mold release device 602 includes a mold release jig 612 and a plurality of cooling tubes 823 provided in the mold release jig 612. The upper surface of the mold release jig 612 coincides with the shape of the die part 32 so that the die part 32 holding the molded product 300 thereon can be placed on the upper surface. A lock pin 66 for preventing the die part 32 from moving upward is inserted through a hole (not shown) provided in a side surface of the mold release jig 612. In addition, ejector pins 632 to be driven by, for example, an air cylinder are inserted through holes (not shown) provided in the lower surface of the mold release jig 612, and the ejector pins 37 provided in the die part 37 are to be pushed by the ejector pins 632.

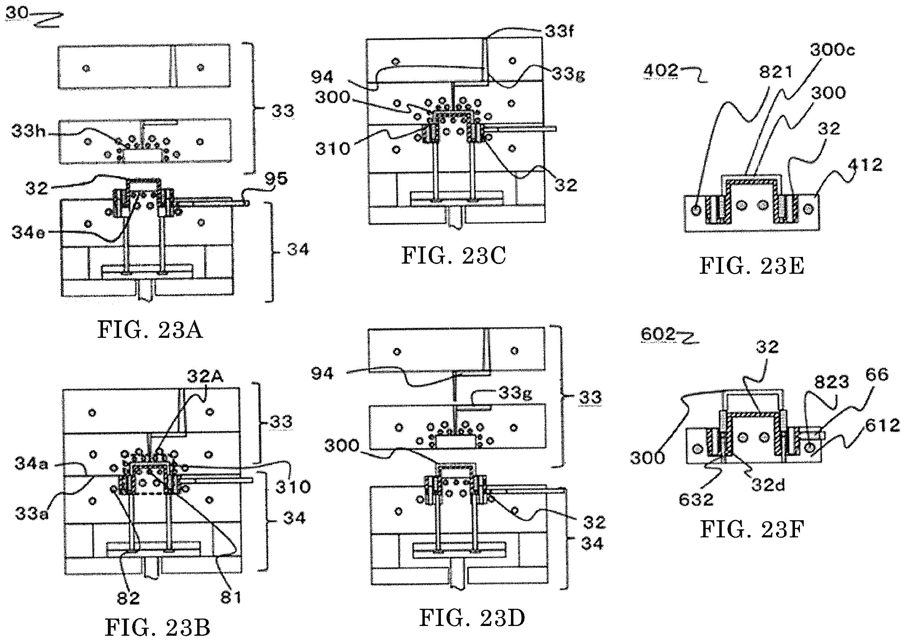

Next, a molded product production method according to embodiment 3 of the present invention will be described. FIG. 23 is a sectional view illustrating the molded product production method according to embodiment 3 of the present invention.

In the present embodiment, as in embodiment 1, PPS resin is used as the molding material for the molded product 300. Therefore, also in the present embodiment, the temperature of the surface 310a of the cavity 310 is set at 130 degrees Celsius, and the temperatures of the first die 33 and the second die 34 are set at 80 degrees Celsius.

FIG. 23(a) shows a die assembling step. In this step, at the molding station 1001, the die part 32 is attached to the second die 34, and in a state in which positioning is performed so that the die part 32 will form the cavity 310 between the die part 32 and the cavity forming groove 33h of the first die 33, the first die 33 and the second die 34 are combined to assemble the molding die 30. Here, the temperature of the outer surface of the die part 32 is adjusted to 80 degrees Celsius in advance. In addition, as in embodiments 1, 2, the temperatures of the first die 33 and the second die 34 are kept at 80 degrees Celsius.

FIG. 23(b) shows a heating step. First, currents are applied to the induction heating coils 81 from the heating control device 1007A via the current conduction part 1006A, to generate eddy currents at the cavity forming portion 32A, whereby the surface 310a of the cavity 310 is directly heated to raise the temperature of the cavity 310 to 130 degrees Celsius. In parallel with this, the abutting surfaces 33a, 34a are caused to abut on each other to form the cavity 310 between the cavity forming groove 33h of the first die 33 and the die part 32. It is noted that, also here, the temperatures of the first die 33 and the second die 34 are kept at 80 degrees Celsius.

FIG. 23(c) shows a molding step. First, by the molding machine 1005, PPS resin melted by its temperature being raised to 310 degrees Celsius is injected from the injection port 33f to fill the cavity 310. Thereafter, the injected PPS resin is contracted, and accordingly, the PPS resin is further supplied from the injection port 33f under some pressure. After a necessary amount of PPS resin is supplied and the molding is completed, the molding machine 1005 shifts to melting and measurement of PPS resin in order to perform the next molding. In this process, until crystallization of the PPS resin filling the cavity 310 reaches saturation, currents are applied to the induction heating coils 81 and the temperature of the surface 310a of the cavity 310 is kept at 130 degrees Celsius. After crystallization of the PPS resin has reached saturation, the supply of currents to the induction heating coils 81 is stopped. Thus, heat of the surface 310a of the cavity 310 is dissipated to the surrounding area, so that the temperature of the surface 310a of the cavity 310 rapidly lowers toward 80 degrees Celsius. Owing to heat transmission of the die part 32 and heat conduction in the molded product 300, the molded product 300 passes, in a short time, a high-temperature zone in which a thermal stress to be relaxed is still small, and then, in a temperature zone near the glass transition temperature in which a thermal stress to be relaxed is great and thus a long time is required, a difference between the temperature of the first die 33 and the second die 34 and the temperature of the molded product 300 is small and the temperature change approaches saturation, so that the molded product 300 is cooled slowly.

At this time, the temperatures of the first die 33 and the second die 34 are kept at 80 degrees Celsius by the cooling control device 1007B. In the die part 32, heat applied to the surface 310a of the cavity 310 by the induction heating coils 81 spreads by heat conduction, and after the induction heating coils 81 are stopped, the die part 32 is cooled toward 80 degrees Celsius by the first die 33 and the second die 34.

FIG. 23(d) shows an extraction step. The first die 33 and the second die 34 are separated from each other, and the die part 32 and the molded product 300 are integrally extracted from the second die 34. The extraction can be performed by the robot arm (not shown) of the robot 1008A, for example. After the extraction step, the die part 32 with the molded product 300 held therein is conveyed to the cooling station 1002 by the robot 1008A.

FIG. 23(e) shows a cooling step. The die part 32 holding the molded product 300 is placed on the cooling jig 412 the temperature of which is kept at 80 degrees Celsius by the cooling tubes 821, to perform cooling. Thus, the molded product 300 is slowly cooled toward 80 degrees Celsius, and the temperature of the die part 32 is also controlled toward 80 degrees Celsius. Here, a cooling jig may be separately provided for holding down the molded product 300 from above, whereby the exposed surface 300c may be restrained during cooling.

After the cooling step, by the robot 1008B, the die part 32 holding the molded product 300 is extracted from the cooling device 401 and conveyed to the mold release station 1004.

FIG. 23(f) shows a mold release step. First, the die part 32 holding the molded product 300 is attached to the mold release device 602. Next, the lock pin 95 is driven to fix the die part 32. Then, the ejector pins 632 are driven to push up the ejector pins 37 of the die part 32, to release the molded product 300. Here, the temperatures of the first mold release jig 611 and the second mold release jig 621 are kept at 80 degrees Celsius by the cooling tubes 823. In this step, by the mold release device 602, the molded product 300 is released from the die part 32, and the temperature of the die part 22 is controlled toward 80 degrees Celsius by the mold release jig 612 the temperature of which is adjusted to 80 degrees Celsius.

After the mold release step, the die part 32 is taken out from the mold release device 602, and then conveyed to the molding station 1001 by the robot 1008D, to return to FIG. 23(a). It is noted that, as described above, during a period from the cooling step to the mold release step, the temperature of the die part 32 has been controlled so as to be 80 degrees Celsius, and therefore its outer surface temperature has become 80 degrees Celsius at the stage of returning to FIG. 23(a).

As described above, these steps are repeated through circulation among the stations. It is noted that, as in embodiments 1, 2, a plurality of die parts 32 may be prepared for the die 34, and the works of the respective steps may be performed in parallel at the same time.

Here, PPS resin which is a crystalline resin is used as the molding material. However, as in embodiments 1, 2, another crystalline resin or a non-crystalline resin may be used.

According to embodiment 3, the same effects as in embodiment 2 can be obtained.

In addition, only a part requiring high dimension accuracy of the molded product is restrained by the die part 32 to perform the extraction. Therefore, the die part can be downsized as compared to embodiments 1, 2.

It is noted that, also in the present embodiment, the induction heating coil may be provided in the cavity forming portion of the die part and the cooling tubes may be provided in the thick portions, as in the above modification of embodiment 1.

### Embodiment 4

Hereinafter, embodiment 4 of the present invention will be described with reference to the drawings. In the present embodiment 4, there are many portions similar to those in embodiment 1, and accordingly, portions having the same functions or effects are denoted by the same reference characters and the description thereof is omitted.

A molded product production device 4000 (not shown) according to embodiment 4 of the present invention has the same configuration as the molded product production device 1000 according to embodiment 1 shown in FIG. 1.

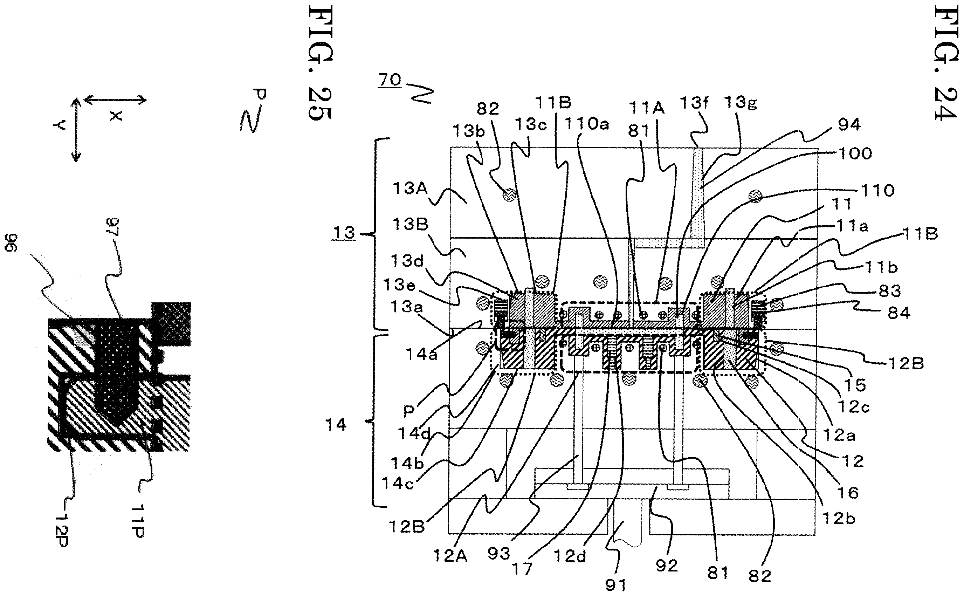

As shown in FIG. 24, a molding die 70 has, at the thick portions 11B and 12B, a part P where the positions of the first die part 11 and the second die part 12 are restrained with each other. FIG. 25 shows an enlarged view of the part P where their positions are restrained with each other. In the present embodiment 4, a projection 11P provided on the first die part 11 and a recess 12P provided in the second die part are fitted to each other, whereby the positions are restrained in the direction Y perpendicular to the die open-close direction X, and a lock pin 97 is inserted into a hole 96 communicating the first die part and the second die part, whereby the positions are restrained in the direction X.

Although not shown, the die part opening station 1003 of the present embodiment 4 is provided with a device formed from, for example, an air cylinder, for removing the lock pin 97. After the molded product 100 is released at the mold release station, the first die part and the second die part are combined and the lock pins 97 are inserted into the communicating holes 96 by, for example, the air cylinder.

Thus, in addition to the effects of the above embodiment 1, the following effects can be obtained.

Firstly, during a period from when the melted resin material is injected from the injection port 13f to when cooling is completed, the first die part 11 and the second die part 12 are integrated without being displaced from each other. Thus, even if the melted resin material is injected at a high pressure or even if a non-crystalline resin the dimension of which is less changed by temperature change is used for molding, the first die part 11 and the second die part 12 are prevented from opening, and therefore the molded product 100 can be formed with further high accuracy.

Secondly, the lock pins 97 are provided at the thick portions having great heat capacities, and when the temperature of the cavity is changed, temperature change in the first die part 11 and the second die part 12 near the lock pins 97 is small, i.e., dimension change is small. Therefore, the positioning can be maintained at high accuracy.

Thirdly, the speed of conveyance between stations from the mold release station 1004 to the die part opening station 1003 can be increased, and therefore the cycle time can be shortened.

The present invention is not limited to the above embodiments, but various design modifications can be made. Accordingly, within the scope of the present invention, the above embodiments may be freely combined with each other, or each of the above embodiments may be modified or simplified as appropriate.

### DESCRIPTION OF THE REFERENCE CHARACTERS

10, 20, 30, 101 molding die
11, 111 first die part
12, 121 second die part
22, 32 die part
11A, 12A, 22A, 32A, 111A, 121A cavity forming portion
11t, 12t, 22t, 32t, 111t, 121t thickness of cavity forming portion
11B, 12B, 22B, 32B, 111B, 121B thick portion
11T, 12T, 22T, 32T, 111T, 121T thickness of thick portion
11b, 12b, 22b, 32b, 111b, 121b hole
13, 23, 33 first die
14, 24, 34 second die
13a, 23a, 33a, 14a, 24a, 34a abutting surface
13b, 14b, 24b, 34b die part attachment groove
16, 26, 36 guide pin
33h cavity forming groove
34e projecting portion
40, 401 cooling device
50 die part opening device
60, 601, 602 mold release device
61, 611 first mold release jig
81 induction heating coil
82, 821, 822, 823, 824 cooling tube
100, 200, 300 molded product
110, 210, 310, 1101 cavity
110a, 210a, 310a, 1101a surface
1000 molded product production device
1001 molding station
1002 cooling station
1003 die part opening station
1004 mold release station
1005 molding machine
1008A, 1008B, 1008C, 1008D robot
11P projection
12p recess
96 hole
97 lock pin

## Claims

1. A molding die comprising:
a pair of dies respectively having abutting surfaces;
a die part provided to at least one of the pair of dies, the die part having a cavity forming portion allowing a cavity to be formed between the cavity forming portion and the other die of the pair of dies, the die part having thick portions provided at both ends of the cavity forming portion; and
heating means for heating a surface of the cavity, wherein
a thickness of the cavity forming portion is smaller than thicknesses of the thick portions.

2. The molding die according to claim 1, wherein
the thick portions of the die part have greater heat capacities than the cavity forming portion, and
the heating means is arranged at such a position that a distance from the cavity of the die part is smaller than the thicknesses of the thick portions.

3. The molding die according to claim 1 or 2, wherein
the die part comprises a first die part and a second die part respectively provided to the pair of dies, and
the first die part and the second die part are detachably fitted to die part attachment grooves respectively provided in the abutting surfaces of the pair of dies.

4. The molding die according to claim 1 or 2, wherein
the die part is detachably fitted to a die part attachment groove provided in the abutting surface of the one of the pair of dies.

5. The molding die according to claim 4, wherein
the abutting surface of the one die has a cavity forming groove, the abutting surface of the other die has a projecting portion covered by the cavity forming portion of the die part, and the cavity is formed between the cavity forming portion and the cavity forming groove.

6. The molding die according to claim 3, wherein
the die part has, at the thick portions of the first die part and the thick portions of the second die part, parts where positions of the first die part and the second die part are restrained.

7. The molding die according to claim 3 or 6, wherein
the pair of dies are provided with guide pins inserted into holes provided in the first die part and the second die part.

8. The molding die according to claim 4 or 5, wherein
the other one of the pair of dies is provided with a guide pin inserted into a hole provided in the die part.

9. The molding die according to according to any one of claims 1 to 8, wherein
the heating means is provided in the pair of dies.

10. The molding die according to according to any one of claims 1 to 8, wherein
the heating means is provided in the cavity forming portion.

11. The molding die according to claim 10, wherein
the thick portions are provided with cooling tubes.

12. The molding die according to according to any one of claims 1 to 11, wherein
the heating means is an induction heating coil.

13. The molding die according to according to any one of claims 1 to 11, wherein
the heating means is a heater.

14. The molding die according to according to any one of claims 1 to 11, wherein
the heating means is a water temperature controller.

15. A molded product production device comprising:
a molding station;
a cooling station;
a die part opening station;
a mold release station; and
conveyance means, wherein
the molding station includes
a molding die including: a pair of dies respectively having abutting surfaces; a first die part and a second die part having cavity forming portions inside which a cavity is formed, and each having thick portions provided at both ends of the cavity forming portion, the first die part and the second die part being detachably fitted to die part attachment grooves respectively provided in the abutting surfaces of the pair of dies; and heating means for heating a surface of the cavity, wherein thicknesses of the cavity forming portions are smaller than thicknesses of the thick portions and a distance between the heating means and the cavity is smaller than the thicknesses of the thick portions, and
a molding machine which injects a molding material into the cavity to mold a molded product,
the cooling station has a cooling device which cools the molded product,
the die part opening station has a die part opening device which opens the first die part and the second die part to separate the first die part from the molded product and the second die part,
the mold release station releases the molded product from the second die part, and
the conveyance means circulates the first die part and the second die part in order of the molding station, the cooling station, the die part opening station, and then the mold release station.

16. A molded product production device comprising:
a molding station;
a cooling station;
a mold release station; and
conveyance means, wherein
the molding station includes
a molding die including: a pair of dies respectively having abutting surfaces; a die part having a cavity forming portion which allows a cavity to be formed between the cavity forming portion and the abutting surface of one of the pair of dies, and having thick portions provided at both ends of the cavity forming portion, the die part being detachably fitted to a die part attachment groove provided in the abutting surface of the other one of the pair of dies; and heating means for heating a surface of the cavity, wherein a thickness of the cavity forming portion is smaller than thicknesses of the thick portions and a distance between the heating means and the cavity is smaller than the thicknesses of the thick portions, and
a molding machine which injects a molding material into the cavity to mold a molded product,
the cooling station has a cooling device which cools the molded product,
the mold release station releases the molded product from the die part, and
the conveyance means circulates the die part in order of the molding station, the cooling station, and then the mold release station.

17. A molded product production device comprising:
a molding station;
a cooling station;
a die part opening station;
a mold release station; and
conveyance means, wherein
the molding station includes
a molding die including: a pair of dies respectively having abutting surfaces; a first die part and a second die part having cavity forming portions inside which a cavity is formed, and each having thick portions provided at both ends of the cavity forming portion, the first die part and the second die part being detachably fitted to die part attachment grooves respectively provided in the abutting surfaces of the pair of dies; and heating means for heating a surface of the cavity, wherein thicknesses of the cavity forming portions are smaller than thicknesses of the thick portions and a distance between the heating means and the cavity is smaller than the thicknesses of the thick portions, and parts where positions of the first die part and the second die part are restrained are provided at the thick portions, and
a molding machine which injects a molding material into the cavity to mold a molded product,
the cooling station has a cooling device which cools the molded product,
the die part opening station has a die part opening device which opens the first die part and the second die part to separate the first die part from the molded product and the second die part,
the mold release station releases the molded product from the second die part,
the conveyance means circulates the first die part and the second die part in order of the molding station, the cooling station, the die part opening station, and then the mold release station, and
the restriction of the first die part and the second die part at the thick portions is made during a period from the mold release station to the die part opening station.

18. A molded product production method using a molding die including: a pair of dies respectively having abutting surfaces; a first die part and a second die part having cavity forming portions inside which a cavity is formed, and each having thick portions provided at both ends of the cavity forming portion, the first die part and the second die part being detachably fitted to die part attachment grooves respectively provided in the abutting surfaces of the pair of dies; and heating means for heating a surface of the cavity, wherein thicknesses of the cavity forming portions are smaller than thicknesses of the thick portions and a distance between the heating means and the cavity is smaller than the thicknesses of the thick portions, the molded product production method comprising:
a heating step of heating the cavity at a predetermined temperature in a state in which the cavity is formed in the cavity forming portions by the abutting surfaces of the pair of dies abutting on each other;
a molding step of injecting a molding material into the cavity to mold a molded product;
an extraction step of extracting the molded product from the pair of dies, integrally with the first die part and the second die part;
a cooling step of cooling the molded product;
a die part opening step of opening the first die part and the second die part to separate the first die part from the molded product and the second die part; and
a mold release step of releasing the molded product from the second die part.

19. A molded product production method using a molding die including: a pair of dies respectively having abutting surfaces; a die part having a cavity forming portion which allows a cavity to be formed between the cavity forming portion and the abutting surface of one of the pair of dies, and having thick portions provided at both ends of the cavity forming portion, the die part being detachably fitted to a die part attachment groove provided in the abutting surface of the other one of the pair of dies; and heating means for heating a surface of the cavity, wherein a thickness of the cavity forming portion is smaller than thicknesses of the thick portions and a distance between the heating means and the cavity is smaller than the thicknesses of the thick portions, the molded product production method comprising:
a heating step of heating the cavity at a predetermined temperature in a state in which the cavity is formed between the cavity forming portion and the abutting surface of the one of the pair of dies by the abutting surfaces of the pair of dies abutting on each other;
a molding step of injecting a molding material into the cavity to mold a molded product;
an extraction step of extracting the molded product from the pair of dies, integrally with the die part;
a cooling step of cooling the molded product; and
a mold release step of releasing the molded product from the die part.
